# DEMANDE DE BREVET EUROPEEN

(11) **EP 0 877 044 A1**
(43) Date de publication de la demande: **11.11.1998**
(21) Numéro de dépôt: 98106903.2
(22) Date de dépôt: 16.04.1998
(51) Int. Cl.: C08J 3/205, C08J 3/21, C08J 3/20

(54) **Polymère chargé par des particules solides**

(30) Priorité: 07.05.1997 FR 9705630
(71) Demandeur: APPRYL S.N.C., F-92400 Courbevoie (FR)
(72) Inventeur: Bussi, Philippe, 27300 Bernay (FR); Thierry-Mieg, Jérôme, Palette, 13100 Le Tholonet (FR)
(74) Mandataire: Rochet, Michel

(57) **Abrégé**

L'invention concerne un procédé de préparation d'une composition à extruder comprenant un polymère et une charge de particules solides, comprenant une étape de mélange de la charge de particules solides avec des particules ou granulés dudit polymère, le cas échéant sous forme de suspension aqueuse.

L'invention est particulièrement simple et mène, au niveau du matériau final, à de meilleures propriétés mécaniques que celles obtenues par incorporation directe de la charge solide dans le polymère ou copolymère. Cette amélioration est très sensible en particulier sur le plan de la résistance aux chocs du matériau final. L'invention concerne également une composition à base de polypropylène comprenant une charge de particules solides comme le kaolin, présentant un haut module de flexion et une bonne résistance aux chocs.

## Description

L'invention concerne un procédé de préparation d'un matériau comprenant une charge de particules solides dispersées dans un polymère par extrusion d'une composition réalisée par mélange de ladite charge avec des particules ou granulés dudit polymère, ainsi que le matériau lui-même et les articles pouvant être réalisés à partir dudit matériau. Les objets de l'invention figurent dans les revendications.

L'incorporation d'une charge solide dans un polymere permet d'améliorer certaines de ses propriétés, comme d'augmenter sa rigidité et sa température de déformation sous charge, et de modifier son aspect comme sa coloration. De plus, dans le cas d'un polymère thermoplastique semicristallin, la présence d'une charge solide en son sein, permet de réduire le retrait lors de son refroidissement, par exemple après sa mise en oeuvre à chaud, par exemple par extrusion, injection ou soufflage.

Cependant, cette incorporation de la charge se traduit généralement également par une influence néfaste sur certaines propriétés du polymère, comme une baisse de sa résistance au choc et une réduction de son allongement à la rupture.

Cette influence de la charge solide sur la rigidité, la température de déformation sous charge, la résistance au choc et l'allongement à la rupture, est d'autant plus forte que le taux de charge solide est important et que le facteur de forme de la charge est élevé. Par facteur de forme, on entend le rapport moyen de la plus grande dimension de particule sur la plus petite dimension de particule.

La demande de brevet AU 9513195 décrit un procédé d'incorporation de talc dans un thermoplastique. Ce procédé fait intervenir de nombreuses étapes, et en particulier la réalisation de granulés obtenus par compression d'un mélange talc/eau/polyéthylène glycol ou polypropylène glycol avant incorporation desdits granulés dans le thermoplastique. Ce procédé ne sert qu'à faciliter la manutention de la poudre de talc et aboutit, au niveau du matériau final, à un résultat identique voire inférieur à celui obtenu par dispersion directe de la poudre initiale sur le polymère fondu. Selon ce procédé, les granulés sont de préférence séchés de façon à en éliminer l'eau jusqu'à atteindre un pourcentage pondéral d'humidité résiduelle inférieur à 0,5 % d'eau par rapport au poids de talc sec. Ce procédé nécessite l'emploi de polyéthylène glycol ou de polypropylène glycol. Compte-tenu des proportions indiquées en talc et en eau , le talc n'est jamais à l'état de suspension à aucun moment du procédé décrit dans ce document.

Selon l'invention, dans un premier aspect, on met en oeuvre une suspension aqueuse de la charge de particules solides, sans qu'il ne soit nécessaire d'éliminer l'eau ni de descendre à un pourcentage pondéral d'humidité résiduelle inférieur à 0,5 % d'eau par rapport au poids de charge minérale et sans qu'il ne soit nécessaire de préparer des granulés par pressage. Ce procédé est donc particulièrement simple, et de plus, mène, au niveau du matériau final à de meilleures propriétés mécaniques que celles obtenues par incorporation directe de la charge solide dans le polymère à l'état fondu. Cette amélioration est très sensible en particulier sur le plan de la résistance aux chocs du matériau final. Ces meilleures propriétés sont obtenues même en l'absence d'utilisation de polyéthylène glycol ou de polypropylène glycol.

L'amélioration apportée par l'invention provient d'une réduction des agglomérats de charge solide et donc d'une meilleure dispersion de ladite charge au sein du matériau final. Il a en effet été découvert, dans le cadre de la présente invention, que le bon état de dispersion d'une charge solide dans une suspension aqueuse pouvait être utilisé pour engendrer un bon état de dispersion de la même charge solide dans un polymère.

L'invention concerne, dans un premier aspect, un procédé de préparation d'une composition à extruder comprenant un polymère et une charge de particules solides, comprenant une étape de mélange d'une suspension aqueuse de la charge de particules solides avec des particules ou granulés dudit polymère. Ce procédé est par la suite appelé "procédé suspension".

Par suspension, on entend que l'espace entre les particules de charge solide est entièrement occupé par un liquide, de préférence aqueux.

De préférence, lors de sa mise en oeuvre dans le cadre de ce procédé, la suspension est homogène. De préférence, la suspension est stable.

La composition à extruder peut être réalisée de très différentes manières, l'essentiel étant, pour ce procédé suspension, que la charge de particules solides passe par l'état de suspension et que ce soit cette suspension qui soit mise en contact avec les granulés ou particules du polymère.

Par exemple, l'étape de mélange menant à la composition à extruder peut être réalisée en continu en tête d'extrudeuse avant entrée dans la zone de fusion du polymère. Ainsi, le mélange peut être réalisé en tête d'extrudeuse à partir
- d'un débit individuel d'une suspension de la charge de particules solides, et
- d'un débit individuel des granulés ou particules du polymère, ou
- d'un débit individuel d'une suspension de la charge de particules solides, et
- d'un débit individuel d'un latex du polymère ou copolymère.

L'étape de mélange peut également être réalisée au préalable dans une opération indépendante de l'extrusion par elle-même. Ce mélange peut alors également être réalisé de manière très varié, en continu ou en discontinu.

A titre de variante, le polymère peut être sous la forme d'un latex pour la mise en contact avec la suspension.

Les ingrédients participant au mélange sont généralement en quantité telle que le mélange aboutit à une préparation comprenant :
- 3 à 30 % en poids d'eau,
- 4 à 60 % en poids de charge de particules solides,
- 20 à 90 % en poids de polymère.

Cette préparation peut constituer la composition à introduire dans l'extrudeuse. Cependant, il n'est pas exclu d'éliminer au moins partiellement l'eau, par exemple par séchage avant introduction dans l'extrudeuse. Comme il a déjà été dit, une étape de séchage n'est pas indispensable dans le cadre de la présente invention, et de toute façon, il ne faut pas réaliser de séchage tel qu'il conduise à une agglomération.

Dans le cadre du procédé suspension, il est indispensable que la charge de particules solides passe par un état de suspension. Dans la suspension, les quantités d'eau et de charge de particules solides doivent être ajustées en fonction de la nature et plus particulièrement de la densité et de la granulométrie de cette dernière, pour que l'état de suspension soit effectivement réalisé.

En particulier, si dans la suspension la charge est du talc, il convient généralement que le rapport en masse de l'eau sur le talc soit supérieur à 0,55 pour que l'état de suspension puisse être obtenu.

Si dans la suspension, la charge est du carbonate de calcium, il convient généralement que le rapport en masse de l'eau sur le carbonate de calcium soit supérieur à 0,25 pour que l'état de suspension puisse être obtenu.

Si dans la suspension, la charge est du kaolin, il convient généralement que le rapport en masse de l'eau sur le kaolin soit supérieur à 0,25 pour que l'état de suspension puisse être obtenu.

Généralement, dans la suspension, le rapport en masse de l'eau sur la charge de particules solides va de 0,2 à 0,65.

La charge de particules solides se présente, à l'état sec, sous la forme d'une poudre. Cette poudre peut présenter un diamètre moyen de taille de particules allant de 0,01 à 50 µm.

Le procédé suspension procure un confort au niveau de la manutention de la charge de particules solides, surtout si celle-ci est très fine, c'est-à-dire présente un diamètre moyen de taille de particules inférieure à 1 µm, et même 5 µm. En effet, de telles poudres sont très difficiles à convoyer en raison de leur faible densité apparente et de leur tendance à s'agglomérer, par exemple sur les parois des installations prévues pour leur dosage ou leur convoyage. Il est donc remédié à ces problèmes en faisant passer la charge de particules solides par un état de suspension. De ce fait également, le dosage de la charge de particules solides pour son convoyage est grandement facilité, et son débit est plus régulier.

La charge solide est infusible et stable dans les conditions de mise en oeuvre selon l'invention. Ceci signifie que la température utilisée en particulier au niveau de l'extrudeuse, est suffisante pour faire fondre le polymère, mais insuffisante pour faire fondre la charge solide.

La charge de particules solides peut être organique ou minérale.

Comme exemple de charge , on peut citer : le talc, le kaolin, le mica, la wollastonite, le carbonate de calcium, le noir de carbone, le graphite, la silice, le trihydrate d'aluminium, le dioxyde de titane, le sulfate de baryum, l'hydroxyde de magnésium, la magnésie, l'alumine, le zircone, les fibres organiques ou minérales, naturelles ou synthétiques, les billes de verre creuses ou pleines, l'ardoise, le marbre, les pigments organiques ou minéraux.

Pour la réalisation du mélange dans le cadre du procédé suspension, le polymère peut se présenter sous la forme de granulés ou, de préférence sous la forme de particules, c'est-à-dire sous la forme d'une poudre.

Cette poudre est de préférence exempte d'angulosité et est donc de préférence préparée par un procédé ne faisant pas intervenir de broyage en fin de préparation, par exemple un broyage cryogénique. Cette poudre peut par exemple être sphérique ou proche de la sphère, et être poreuse ou non poreuse.

Pour la réalisation du mélange dans le cadre du procédé suspension, le polymère peut être utilisé sous la forme d'une poudre en suspension aqueuse, communément appelée "latex".

Lorsqu'il est sous la forme de poudre, le polymère présente de préférence un diamètre moyen de taille de particules allant de 1 à 2000 µm.

La présente invention peut être utilisée chaque fois que l'on cherche à améliorer la dispersion d'une charge de particules solides dans un polymère.

Dans le cadre de la présente demande, le terme polymère recouvre ceux d'homopolymère, copolymère, interpolymère et les mélanges de polymères.

Le polymère peut être choisi parmi les thermoplastiques comme les polyoléfines telles que le polypropylène, le polyéthylène, le polybutylène. Ces polyoléfines peuvent être des homopolymères, des copolymères, séquencés ou statistiques. Elles peuvent également être modifiées, par exemple par greffage ou copolymérisation, pour contenir des monomères fonctionnels ou non. Un tel monomère fonctionnel peut par exemple être un acide, un anhydride, une imide, une amide, un alcool, un acétate, un acrylate.

Le polymère peut être choisi parmi les mélanges de polyoléfines ou les compositions comprenant au moins une polyoléfine et un autre thermoplastique ou élastomère.

Le polymère peut être choisi parmi les polymères chlorés comme le polychlorure de vinyle (PVC), les polymères acryliques ou méthacryliques comme le polyméthacrylate de méthyle, les polymères vinylaromatiques comme le polystyrène, les polymères fluorés comme le polyfluorure de vinylidène, les polyacétals comme le polyoxyméthylène, les polyamides, les polyimides, les polycétones, les polyesters comme le polybutylène téréphtalate, les polycarbonates.

Généralement, le polymère présente un indice de fusion à 190°C sous 2,16 kg (norme ISO 1133 : 91) allant de 0,01 à 200 g/10 min et de préférence, à 230°C sous 2,16 kg, allant de 0,1 à 60 g/10 min.

La suspension intervenant pour la réalisation de la composition peut être disponible commercialement. La suspension présente généralement une viscosité Brookfield à 23°C et à 100 révolutions par min. inférieure à 10 000 mPa.s et de préférence inférieure à 3 000 mPa.s. Une telle suspension comprend généralement au moins un agent dispersant comme par exemple un polyacrylate de façon à ce qu'elle soit homogène et stable. Elle peut comprendre au moins un autre additif, tel que par exemple au moins un agent antiseptique.

L'invention concerne également, dans un second aspect, un procédé de préparation d'un matériau comprenant une charge de particules solides dispersées dans un polymère par extrusion d'une composition réalisée par mélange de ladite charge avec des particules dudit polymère. Ce procédé est par la suite appelé "procédé voie sèche". Dans ce procédé, les particules de charge et les particules de polymère sont mélangés à sec, c'est-à-dire sans qu'il ne soit nécessaire d'ajouter un liquide. Bien entendu, il n'est pas exclus que les particules de charge et/ou de polymère contiennent de l'eau sous forme adsorbée, comme c'est le cas de tous les solides mis en contact avec l'air ambiant. Cela signifie donc que la composition destinée à alimenter l'extrudeuse ne contient de préférence pas de liquide formant une phase indépendante des particules solides. Ainsi, il faut bien distinguer ce procédé de celui consistant à mélanger les particules dans un liquide, à procéder à un séchage pour éliminer le liquide, puis à passer le solide résultant dans l'extrudeuse. En effet, le séchage conduit à la formation d'un "gâteau" ("cake" en anglais) et à une agglomération des particules, ce qui nuit à la qualité de la dispersion au sein du matériau final et donc aux propriétés mécaniques de ce dernier.

Dans ce procédé, le polymère et les particules de charge sont mélangées à sec, et le mélange ainsi obtenu est introduit tel quel dans l'extrudeuse.

Dans le cadre de ce procédé "voie sèche", on peut utiliser les charges solides et les polymères précédemment envisagés dans le cadre du procédé "suspension".

Dans le procédé "voie sèche", le polymère est de préférence sous la forme de particules dont le diamètre moyen va de 50 µm à 1,3 mm. Dans ce procédé, il n'est pas exclu qu'au moins un constituant devant entrer dans la composition du matériau final se présente sous la forme de granulés, comme par exemple des granulés de mélange maître colorant. Cependant, il est préférable que la composition destinée à être extrudée dans le cadre du procédé voie sèche soit constitué pour plus de 50 % et même pour plus de 90 % de sa masse de particules au diamètre moyen inférieur à 1 mm.

Dans le cadre des procédés "suspension" et "voie sèche", le matériau obtenu après extrusion peut comprendre au moins un additif usuel aux matières plastiques, tel qu'au moins un stabilisant, un agent ignifugeant, un antioxydant. Quelques uns de ces additifs sont par exemple cités dans Additives for plastics handbook, John Murphy, Elsevier advanced technology, ISBN 1856 172813, 1996. Dans le but de son incorporation dans le matériau final, cet additif peut être mis en contact avec le polymère avant extrusion, de différentes manières. Par exemple, dans le cadre du procédé suspension, il peut être introduit dans la suspension de la charge de particules solides, ou être déjà présent dans la poudre ou les granulés de polymère.

L'additif peut également être ajouté dans la partie avale de l'extrudeuse, c'est-à-dire après que les différents ingrédients participant à l'invention aient été mis en contact.

Les procédés suspension et voie sèche mettent tous deux en oeuvre l'extrusion d'une composition. Suivant l'état physique de la composition, on utilise le moyen de convoyage adapté pour l'amener à l'extrudeuse. Si la composition est riche en liquide, comme pour une suspension, le mélange peut être convoyé, et, dosé comme un liquide, par une pompe. Si la composition est riche en solide, elle peut être convoyée et dosée par un doseur à vis ou un doseur à bande.

Dans l'extrudeuse, la composition est portée à une température suffisante pour fondre le polymère. On préfère utiliser une extrudeuse à zone de fusion franche, comme une extrudeuse bivis corotative ou de type comalaxeur équipée d'un profil de vis adapté, plutôt qu'une extrudeuse à zone de fusion progressive comme une extrudeuse monovis.

Dans le cadre du procédé suspension, l'eau initialement présente dans la composition est éliminée sous l'effet de la chaleur, pour partie en entrée d'extrudeuse, pour le reste au niveau du ou des puits de dégazage situés le long de l'extrudeuse.

Dans le cadre de la préparation du matériau par les voies suspension ou sèche, la charge de particules solides et la température d'extrusion sont à choisir pour que ladite charge ne fonde pas lors de l'extrusion.

Généralement, lorsque l'on s'intéresse à un polymère chargé par des particules solides, on cherche un rapport en masse de la charge sur le polymère allant de 0,05 à 17. Ainsi, les différents ingrédients mis en oeuvre dans le cadre des procédés suspension et voie sèche peuvent être introduits de façon à ce que le matériau final présente un tel rapport charge/polymère. Un tel rapport peut être observé dans le cadre du procédé suspension dès l'étape de mélange de la suspension avec le polymère.

L'extrusion mène à un matériau qu'il est par exemple possible de granuler. Le polymère peut être un polymère du propylène.

Les procédés suspension ou voie sèche sont particulièrement adaptés à l'incorporation d'une charge solide particulaire dans le polypropylène ou un copolymère séquencé propylène-éthylène. Un tel copolymère peut comprendre de 4 à 16 % en poids d'éthylène, et peut être fonctionnalisé par greffage, par exemple d'anhydride maléïque.

L'invention concerne également, dans un troisième aspect, un matériau comprenant un polymère du propylène et une charge de particules solides, ci-après appelé "matériau à base de polypropylène".

Les charges solides peuvent être incorporées dans les polypropylènes en particulier pour augmenter leurs modules de flexion. Cependant, l'introduction de charges solides dans le polypropylène a généralement tendance à le fragiliser (plus faible résistance aux chocs) car les particules de charge solide tendent à amorcer les fissures sous l'effet des chocs. Pour compenser cet effet indésirable, on peut incorporer dans le matériau à base de polymère du propylène des unités polymérisées de l'éthylène, par exemple sous la forme d'unités copolymérisées avec le propylène au sein du polypropylène lui-même, ou sous la forme d'un ajout d'un polymère différent du polypropylène formant la base du matériau. Ainsi, selon cette seconde variante, peut-on ajouter à la composition comprenant le polypropylène par exemple un copolymère de l'éthylène et du propylène, habituellement appelé "éthylène-propylène rubber" et couramment désigné par "EPR". Un tel copolymère peut par exemple comprendre 50 % en poids d'unités polymérisées issus de l'éthylène et 50 % en poids d'unités polymérisées issus du propylène. L'incorporation d'unités polymérisées de l'éthylène dans un matériau à base de polypropylène entraîne cependant généralement une baisse de son module de flexion, une augmentation de sa viscosité ce qui rend plus difficile son injection, une diminution de sa tenue aux solvants comme les alcools ou les hydrocarbures, une diminution de sa résistance à la rayure et une diminution de sa température de déflexion sous charge. C'est la raison pour laquelle il peut également être souhaité de minimiser la teneur en unités polymérisées de l'éthylène au sein des matériaux à base de polypropylène comprenant une charge de particules solides, dès lors que les propriétés qui viennent d'être mentionnées revêtent de l'importance.

Il est donc difficile de renforcer un polypropylène par une charge de particules solides de façon à augmenter son module de flexion, sans perdre beaucoup de sa résistance aux chocs, et tout en lui incorporant le moins possible d'unité polymérisé de l'éthylène, et tout en conservant une bonne résistance à la rayure.

Le matériau à base de polypropylène selon l'invention apporte une solution aux problèmes susmentionnés.

Ce matériau comprend au moins un polymère du propylène et au moins une charge de particules solides, ledit polymère du propylène présentant un rapport de l'énergie totale de pénétration sur l'énergie à la force de pointe d'au moins 1,8, tel que mesuré selon la norme ISO 6603-2 : 1989 (F), la charge solide étant en quantité suffisante pour que le rapport du module de flexion du matériau sur celui du polymère du propylène soit supérieur à 1,7, lesdits modules de flexion étant mesurés selon la norme ISO 178 : 93, la charge de particules solides étant suffisamment dispersée au sein du matériau pour que l'énergie totale de pénétration du matériau représente au moins 80 % de l'énergie totale du polymère du propylène, lesdites énergies totales étant déterminées par mesure de la résistance sous choc multiaxial selon la norme ISO 6603-2 : 1989 (F), ledit matériau étant tel qu'au moins 60 % de sa masse est constituée d'unités polymérisées du propylène.

La préparation du matériau selon l'invention peut même être optimisée de façon à ce que son module de flexion selon la norme ISO 178 : 93 soit supérieur à 1 800 MPa et sa résistance au choc multiaxial mesuré selon la norme ISO 6603-2 : 1989 (F) soit d'au moins 60 joules.

Le matériau à base de polypropylène selon l'invention peut comprendre de 17 à 25 % en poids de charge de particules solides. La charge doit être suffisamment dispersée au sein du matériau, ce qui peut être obtenu à l'aide des procédés "suspension" et "voie sèche" précédemment décrits, le procédé suspension donnant généralement des résultats supérieurs, en particulier sur le plan de la résistance aux chocs.

Pour le matériau à base de polypropylène selon l'invention, la charge de particules solides présente de préférence un diamètre moyen inférieur à 2 µm.

De manière encore préférée, la charge de particules solides présente un diamètre moyen inférieur à 0,8 µm. De préférence, la charge de particules solides est telle que la fraction en masse des particules de taille inférieure à 2 µm est d'au moins 95 %. De préférence, la charge de particules solides est le kaolin.

Le matériau à base de polypropylène selon l'invention peut comprendre au moins un colorant. Le matériau à base de polypropylène selon l'invention peut comprendre au moins un pigment organique ou inorganique généralement sous la forme de particules, lequel peut être incorporé dans ledit matériau à partir d'un mélange maître. Le mélange maître peut comprendre un polymère d'au moins une oléfine telle que l'éthylène ou le propylène. Comme exemple de polymère de l'éthylène on peut citer le polyéthylène basse densité. Le mélange maître peut comprendre, par exemple, de 30 à 60 % en poids de polymère d'au moins une oléfine et 40 à 70 % en poids de pigments. Comme exemple de pigments, on peut citer : le dioxyde de titane, le noir de carbone, le titanate de chrome, l'oxyde de fer rouge, le vert ou le bleu de phtalocyanine.

Le matériau à base de polypropylène selon l'invention peut également ne pas comprendre de pigment ; il peut également ne pas comprendre d'homopolyéthylène ; il peut également ne pas comprendre de fibres ; il peut comprendre moins de 10 % voire moins de 8 % en poids d'éthylène polymérisé.

Les matériaux obtenus par les procédés "suspension" et "voie sèche", ainsi que le matériau à base de polypropylène selon l'invention sont obtenus après une extrusion pouvant être suivie d'une granulation. Ces matériaux, le cas échéant sous la forme de granulés, peuvent être transformés en articles par les techniques habituelles de transformation des matières plastiques, comme l'injection. Ils sont plus particulièrement destinés à la réalisation d'articles présentant un volume supérieur à 1cm³ et/ou à la réalisation d'articles présentant une épaisseur minimale dans toutes les directions d'au moins 1 mm, voire d'au moins 2 mm, voire d'au moins 3 mm. Ces matériaux, en particulier ceux contenant un polymère du propylène, sont particulièrement adaptés à la réalisation de pièces dans l'habitacle intérieur de véhicules automobile comme les planches de bord des véhicules automobiles.

Dans les exemples qui suivent, on utilise les ingrédients suivants :
Carbonate de calcium sous forme de poudre : La granulométrie du carbonate de calcium utilisée est caractérisée par un diamètre moyen de 0,7 µm et par une fraction en poids de particules inférieures à 1 µm de 82 % (courbe granulométrique obtenue sur un appareil de type Sédigraph 5100). Le carbonate de calcium est de forme sensiblement rhomboédrique.
Suspension de carbonate de calcium dans l'eau : Cette suspension utilise le carbonate de calcium précité et est caractérisée par un taux d'extrait sec de 76 %. Sa viscosité Brookfield à 23°C et à 100tr/min est inférieure à 400 mPa.s. Cette suspension est commercialisée sous la marque Setacarb 80-0G par la société OMYA.
Kaolin K1 sous forme de poudre : La granulométrie de ce kaolin, appelé "kaolin K1", est caractérisée par un diamètre moyen compris entre 0,3 et 0,5 µm et par une fraction en poids de particules inférieure à 2 µm de 97 %(courbe granulométrique obtenue sur un appareil de type Sédigraph 5100). Ce kaolin K1 est de forme sensiblement lamellaire polygonale.
Suspension S1 de kaolin K1 dans l'eau : Cette suspension utilise le kaolin K1 précité et est caractérisée par un taux d'extrait sec de 74 %. Sa viscosité Brookfield à 23°C et à 100tr/min. est de 230 mPa.s. Cette suspension est commercialisée sous la marque Amazon 88 par la société Kaolins d'Arvor.
Suspension S2 de kaolin K2 dans l'eau :
   Cette suspension utilise un kaolin, appelé kaolin K2, dont la granulométrie est caractérisée par un diamètre moyen compris entre 0,5 et 1 µm et par une fraction en masse de particules de taille inférieure à 5 µm de 92 %. Son taux d'extrait sec est de 67 %. Sa viscosité Brookfield à 23°C et à 100 tr/min est de 300 mPa.s. Cette suspension est commercialisée sous la marque Hélite MS par la société Kaolins d'Arvor.
Talc sous forme de poudre : La granulométrie du talc utilisé est caractérisé par un diamètre moyen de 1,8 µm et par une fraction en poids de particules inférieures à 5 µm de 90 % (courbe granulométrique obtenue sur un appareil de type Sédigraph 5100). Le talc est de forme sensiblement lamellaire.
Suspension de talc dans l'eau : Cette suspension utilise le talc précité et est caractérisée par un taux d'extrait sec de 60 %. Sa viscosité Brookfield à 23°C et à 100 tours par minute est inférieure à 1200 mPa.s. Cette suspension contient un dispersant de type polyacrylate à raison d'environ 0,5 % en poids.
Mélange maître colorant :
   granulés d'une composition comprenant 47 % en poids de polyéthylène basse densité et 53 % en poids de pigments, ces derniers étant un mélange de dioxyde de titane, noir de carbone, titanate de chrome, oxyde de fer rouge, vert de phtalocyanine.
PP1 : Copolymère Bloc Propylène-Ethylène contenant environ 7,7 % en poids d'Ethylène. Ce copolymère est utilisé sous forme de poudre telle qu'issue d'un réacteur de polymérisation. Ses grains ont une forme sensiblement sphérique et leur diamètre va de 0,3 à 1,3 mm. Ce copolymère présente un indice de fluidité à 230°C sous 2,16 kg compris entre 9 et 11 g/10 min (norme ISO 1133:91) suite à une extrusion sur extrudeuse bivis corotative lors de laquelle on ajoute aussi les additifs de stabilisation suivants : 1000 ppm d'un mélange 50/50 en poids de Tris (2,4-ditertiobutylphényl) phosphite (Irgafos 168 de la société Ciba Geigy) et de Tetrakis [3(3'.5'-ditertiobutylphényl)propionate] méthane (Irganox 1010 de la société Ciba Geigy) et 500 ppm d'hydrotalcite (DHT4A de la société Mitsui). PP1 désigne donc le copolymère sans les additifs de stabilisation, mais ces derniers sont mélangés à PP1 lors de la mise en oeuvre des procédés décrits ci-après. Ce copolymère, testé en résistance au choc multiaxial selon la norme ISO 6603-2 : 1989 (F), présente un rapport de l'énergie totale de pénétration sur l'énergie à la force de pointe de 1,95.
PP2 : Copolymère Bloc Propylène-Ethylène contenant environ 9,5 % en poids d'Ethylène. Ce copolymère est utilisé sous forme de poudre telle qu'issue d'un réacteur de polymérisation. Ses grains ont une forme sensiblement sphérique et leur diamètre varie de 0,3 à 1,3 mm. Ce polymère est caractérisé par un indice de fluidité à 230°C sous 5 kg compris entre 8 et 12 g/10 min (Norme ISO 1133:91) suite à une extrusion sur extrudeuse bivis corotative lors de laquelle on ajoute aussi les mêmes additifs de stabilisation que ceux décrits dans le cas de PP1 et dans les mêmes proportions. PP2 désigne donc le copolymère sans les additifs de stabilisation mais ces derniers sont mélangés à PP2 lors de la mise en oeuvre des procédés décrits ci-après.
PP3 : granulés sensiblement cylindriques ayant un diamètre compris entre 3 et 4 mm et une longueur comprise entre 3 et 5 mm, d'une composition obtenue par extrusion de PP1 au cours de laquelle ont été ajoutés les mêmes quantités d'additifs de stabilisation utilisés dans le cadre de la caractérisation de PP1. PP3 désigne donc des granulés d'une composition comprenant un copolymère et des additifs de stabilisation.

Dans les exemples qui suivent, on compare les procédés suivants :

### Procédé P0 (comparatif) :

Aucune charge solide n'est utilisée. Le copolymère et, le cas échéant, le mélange maître colorant, sont introduits en entrée d'extrudeuse.

### Procédé P1 (comparatif) :

Le copolymère, les additifs de stabilisation et le cas échéant le mélange maître colorant sont introduits en entrée d'extrudeuse, puis la charge solide sous forme de poudre est introduite en zone fondue, c'est-à-dire au niveau d'un puits de dégazage, à l'aide d'un doseur.

### Procédé P2 (selon l'invention) :

Le copolymère et les additifs de stabilisation d'une part, et la charge sous forme de suspension d'autre part, sont introduits individuellement en entrée d'extrudeuse.

### Procédé P3 (selon l'invention) :

On prépare un prémélange du copolymère et de la suspension dans le proportions de 80 % en poids pour le copolymère et ses additifs et 20 % en poids pour la suspension, et ce prémélange est introduit en entrée d'extrudeuse.

### Procédé P4 (comparatif) :

Le copolymère et les additifs de stabilisation sont introduits en entrée d'extrudeuse, et la suspension est introduite en zone fondue de l'extrudeuse, c'est-à-dire au niveau de l'un de ses puits de dégazage.

### Procédé P5 (voie sèche) :

Le copolymère, les additifs de stabilisation, le cas échéant, le mélange maître colorant et la charge solide sous forme de poudre sont prémélangés dans un mélangeur rapide qui peut être par exemple un tonneau d'axe vertical en rotation selon un axe horizontal, ou un tonneau fixe à l'intérieur duquel quatre pales sont en rotation (mélangeur de marque Henschel). Le mélange ainsi obtenu est introduit en entrée d'extrudeuse.

Dans les exemples qui suivent, on a utilisé les techniques de caractérisation suivantes :
- Ml2 : indice de fusion à 230°C sous 2,16 kg (norme ISO 1133:91),
- Ml5 : indice de fusion à 230°C sous 5 kg (norme ISO 1133:91),
- Taux de charge de la composition finale : par mesure du taux de cendres à 600°C. Dans le cas particulier du kaolin, on tient compte de l'eau de cristallisation contenue dans la charge (environ 14 % en poids) pour relier taux de cendres et taux de charges. Cette correction n'est pas nécessaire dans le cas du carbonate de calcium et dans le cas du talc,
- La résistance à la rayure est mesurée sur une plaque injectée après frottement par un papier abrasif. On mesure la variation de luminance due à l'abrasion, par spectrocolorimétrie dans le domaine du visible. Une forte variation de luminance reflète une faible résistance à la rayure.

### - Propriétés mécaniques :

Les compositions obtenues sont injectées sur presse à des températures de 210 à 240°C sous forme de barreaux ou de plaques. Les barreaux ont les dimensions suivantes : 80X10X4 mm et permettent d'effectuer les essais de Module de Flexion (Norme ISO 178:93) et de Choc Charpy Entaillé (Norme ISO 179:93 1EA) ou Non Entaillé (Norme ISO 179:93 1EU). Les plaques ont les dimensions suivantes : 100x100x3 mm et permettent d'effectuer les essais de choc multiaxial à une vitesse de 4.3 m/s (Norme ISO 6603-2:89). Dans ce dernier test, on mesure l'énergie totale absorbée par le matériau au cours du choc, et on évalue l'allure de la courbe force-déformation. L'allure de cette courbe permet, de façon connue de l'homme du métier, de déterminer le type de rupture de l'échantillon : ductile ou fragile. Dans les tableaux, 100 % D signifie que 100 % des plaques ont été cassés de manière ductile. Tous les essais mécaniques sont effectués à 23°C. Les barreaux et les plaques sont conditionnés à température ambiante pendant au minimum 5 jours avant d'être testés.

Dans les tableaux, 100 % C signifie que 100 % des barreaux ont été cassés totalement, et 100 % P signifie que 100 % des barreaux ont été cassés partiellement.

### EXEMPLES 1 A 5

On utilise une extrudeuse bivis corotative de diamètre de vis 30 mm (Werner ZSK30) avec un débit total de 10 kg/h. Ce débit représente la somme des débits des ingrédients utilisés. Les températures de consigne des fourreaux sont celles utilisées usuellement pour un polypropylène, c'est-à-dire 210 à 240°C. Cependant, la température de la zone située immédiatement après l'entrée de l'extrudeuse est de 265 à 280°C afin de favoriser la fusion rapide de la poudre de copolymère. Les joncs issus de la machine sont refroidis par bac à eau et sont transformés en granulés. Le cas échéant, la proportion de suspension introduite dans l'extrudeuse est calculée pour conduire en final, c'est-à-dire après élimination de l'eau, au taux de charges souhaité.

Le copolymère utilisé est PP1 et la charge utilisée est le kaolin, sous forme de suspension S1 ou de poudre K1, suivant le procédé utilisé.

Le tableau 1 rassemble les résultats.

### EXEMPLES 6 A 8

On procède comme pour les exemples 1 à 5 sauf que l'on utilise le copolymère PP2 à la place du copolymère PP1, que l'on utilise la charge de carbonate de calcium à la place de la charge de kaolin, et sauf que l'on utilise une extrudeuse bivis corotative de diamètre de vis 40 mm (Werner ZSK 40) avec un débit total de 20 kg/h.

Le tableau 2 rassemble les résultats.

### EXEMPLES 9 ET 10

On procède comme pour les exemples 6 à 8 sauf que l'on utilise le copolymère PP1 et que la charge est le talc. Le tableau 3 rassemble les résultats.

**TABLEAU 1**

| | **EXEMPLE N°** | | | | |
|---|---|---|---|---|---|
| | **1** | **2** | **3** | **4** | **5** |
| **PROCEDE** | P0 (comparatif) | P1 (comparatif) | P2 | P3 | P4 (comparatif) |
| **Taux de % charges en poids** | 0,0 | 17,5 | 13,5 | 15,0 | 13,5 |
| **Ml2 g/10 min.** | 11,0 | 12,5 | 5,0 | 5,0 | 12,5 |
| **Module de MPa flexion** | 1030 | 1450 | 1410 | 1485 | 1275 |
| **Choc Charpy kJ/m2 Entaillé** | 7,0 (100 % C) | 4,5 (100 % C) | 8,0 (100 % C) | 8,5 (100 % C) | 4,0 (100 % C) |
| **Energie Joules totale/Choc multiaxial** | 77 | 20 | 70 | 71 | 8 |

**TABLEAU 2**

| | | **EXEMPLE N°** | | |
|---|---|---|---|---|
| | | **6** | **7** | **8** |
| | **Procédé** | P0 (comparatif) | P1 (comparatif) | P2 |
| **Taux de charges** | **% en poids** | 0,0 | 25,0 | 22,5 |
| **Ml5** | **g/10 min.** | 10,5 | 3,5 | 4,5 |
| **Module de Flexion** | **MPa** | 990 | 1430 | 1379 |
| **Choc Charpy Entaillé** | **kJ/m2** | 14,0 | 10,5 (100%C) | 50,0 (100% P) |
| **Energie Totale / Choc multiaxial** | **Joules** | 80 | 35 | 73 |

**TABLEAU 3**

| | | **EXEMPLE N°** | |
|---|---|---|---|
| | | **9** | **10** |
| | **Procédé** | P2 | P1 (comparatif) |
| **Taux de charges** | **% en poids** | 11,5 | 14,0 |
| **Ml2** | **g/10 min.** | 9,5 | 14,0 |
| **Module de Flexion** | **MPa** | 1920 | 1840 |
| **Choc Charpy Entaillé** | **kJ/m2** | 7,0 (100 % C) | 4,0 (100%C) |
| **Energie Totale / Choc multiaxial** | **Joules** | 59 | 38 |

### EXEMPLES 11 ET 12

On utilise une extrudeuse bivis corotative de diamètre de vis 40mm (Werner ZSK40) avec un débit total de 40 kg/h. Ce débit représente la somme des débits des ingrédients utilisés. Les températures de consigne des fourreaux sont celles utilisées usuellement pour un polypropylène, c'est-à-dire 210 à 240°C. Cependant, la température de la zone située immédiatement après l'entrée de l'extrudeuse est de 260 à 280°C afin de favoriser la fusion rapide de la poudre de copolymère. Les joncs issus de la machine sont refroidis dans un bac à eau et sont transformés en granulés. La proportion de suspension introduite dans l'extrudeuse est calculée pour conduire en final, c'est-à-dire après élimination de l'eau, au taux de charge souhaité.

Le copolymère utilisé est PP1 et la charge utilisée est le kaolin. La suspension S2 a été utilisée pour l'exemple 11 et la suspension S1 a été utilisée pour l'exemple 12. Le tableau 4 rassemble les résultats.

### EXEMPLES 13 A 16

On utilise une extrudeuse bivis corotative de diamètre de vis 40 mm (Werner ZSK40) avec un débit total de 40 kg/h. Ce débit représente la somme des débits des ingrédients utilisés. Les températures de consigne des fourreaux sont celles utilisées habituellement pour un polypropylène c'est-à-dire 210 à 240°C. Cependant, la température de la zone située immédiatement après l'entrée de l'extrudeuse est de 260 à 280°C afin de favoriser la fusion rapide de la poudre de copolymère. Les joncs issus de l'extrudeuse sont refroidis dans un bac à eau et sont transformés en granulés. Le tableau 5 rassemble les résultats.

Le copolymère utilisé dans les exemples 13 à 15 est PP1. Le copolymère utilisé dans l'exemple 16 est PP3. La charge minérale utilisée est le kaolin K1 sous forme de poudre.

**TABLEAU 4**

| | | **EXEMPLE N°** | |
|---|---|---|---|
| | | **11** | **12** |
| | **Procédé** | P2 | P2 |
| **Taux de charges** | **% en poids** | 21 | 24 |
| **Module de Flexion** | **MPa** | 2180 | 1930 |
| **Energie totale / choc multiaxial** | **Joules** | 47 | 72 |
| **Type de rupture** | | 10 % D | 100 % D |

**TABLEAU 5**

| | | **EXEMPLE N°** | | | |
|---|---|---|---|---|---|
| | | **13** | **14** | **15** | **16** |
| | **PROCEDE** | P0 (comparatif) | P5 | P5 | P1 (comparatif) |
| **Taux de charges** | **% en poids** | 0 | 21 | 20 | 21 |
| **Mélange maître colorant** | **% en poids** | 6 | 6 | 3 | 6 |
| **Ml2** | **g/10 min** | 9 | 5,4 | | 4,3 |
| **Module de flexion** | **MPa** | 1050 | 1840 | | 1700 |
| **Energie totale / choc multiaxial** | **Joules** | 73 | 68 | | 26 |
| **Ductilité** | | 100 % D | 100 % D | | 0 % D |
| **Résistance à la** rayure | | < 1 | 1,7 | 1,7 | 1,65 |

## Revendications

1. Procédé de préparation d'un matériau comprenant une charge de particules solides dispersée dans un polymère par extrusion d'une composition réalisée par mélange d'une suspension aqueuse de ladite charge avec des particules ou granulés dudit polymère.

2. Procédé selon la revendication 1 caractérisé en ce que le mélange est réalisé avant entrée dans la zone de fusion du polymère dans l'extrudeuse, et en ce que l'extrusion est réalisée à une température suffisante pour fondre le polymère et insuffisante pour faire fondre la charge de particules solides, l'eau initialement présente dans la composition étant éliminée sous l'effet de la chaleur pour partie en entrée d'extrudeuse, pour le reste au niveau du ou des puits de dégazage situés le long de l'extrudeuse.

3. Procédé selon l'une des revendications précédentes caractérisé en ce que le mélange aboutit à une préparation comprenant :
- 3 à 30 % en poids d'eau,
- 4 à 60 % en poids de charge de particules solides,
- 20 à 90 % en poids de polymère.

4. Procédé selon l'une des revendications précédentes caractérisé en ce que, dans la suspension, le rapport en masse de l'eau sur la charge va de 0,2 à 0,65.

5. Procédé selon l'une des revendications précédentes caractérisé en ce que la suspension présente une viscosité Brookfield à 23°C et à 100 révolutions par minute inférieure à 10 000 mPa.s.

6. Procédé de préparation d'un matériau comprenant une charge de particules solides dispersée dans un polymère par extrusion d'une composition réalisée par mélange à sec de ladite charge avec des particules dudit polymère.

7. Procédé selon la revendication 6 caractérisé en ce que la composition est constituée pour plus de 50 % de sa masse de particules au diamètre moyen inférieur à 1 mm.

8. Procédé selon l'une des revendications précédentes caractérisé en ce que le polymère est sous la forme de particules dont le diamètre moyen va de 1 à 2000 µm.

9. Procédé selon l'une des revendications précédentes caractérisé en ce que le rapport en masse de la charge sur le polymère va de 0,05 à 17.

10. Procédé selon l'une des revendications précédentes caractérisé en ce que la charge de particules solides présente un diamètre moyen de taille de particules allant de 0,01 à 50 µm.

11. Procédé selon l'une des revendications précédentes caractérisé en ce que le diamètre moyen de taille de particules de la charge est inférieur à 5 µm.

12. Procédé selon l'une des revendications précédentes caractérisé en ce que la charge de particules solides est choisie parmi le kaolin le carbonate de calcium ou le talc.

13. Procédé selon la revendication 12 caractérisé en ce que la charge est en kaolin.

14. Procédé selon l'une des revendications précédentes caractérisé en ce que le polymère est un polymère du propylène.

15. Matériau susceptible d'être obtenu par le procédé de l'une des revendications précédentes.

16. Matériau comprenant au moins un polymère du propylène et au moins une charge de particules solides, ledit polymère du propylène présentant un rapport de l'énergie totale de pénétration sur l'énergie à la force de pointe d'au moins 1,8, tel que mesuré selon la norme ISO 6603-2 : 1989 (F), la charge solide étant en quantité suffisante pour que le rapport du module de flexion du matériau sur celui du polymère du propylène soit supérieur à 1,7, lesdits modules de flexion étant mesurés selon la norme ISO 178 : 93, la charge de particules solides étant suffisamment dispersée au sein du matériau pour que l'énergie totale de pénétration du matériau représente au moins 80 % de l'énergie totale du polymère du propylène, lesdites énergies totales étant déterminées par mesure de la résistance sous choc multiaxial selon la norme ISO 6603-2 : 1989 (F), ledit matériau étant tel qu'au moins 60 % de sa masse est constituée d'unités polymérisées du propylène.

17. Matériau selon la revendication 16 caractérisé en ce qu'il comprend 17 à 25 % en poids de charge de particules solides.

18. Matériau selon la revendication 16 ou 17 caractérisé en ce que la charge de particules solides présente un diamètre moyen inférieur à 2 µm.

19. Matériau selon la revendication 18 caractérisé en ce que la charge de particules solides présente un diamètre moyen inférieur à 0,8 µm.

20. Matériau selon l'une des revendications 16 à 19 caractérisé en ce que la charge de particules solides est telle que la fraction en masse des particules de taille inférieure à 2 µm est d'au moins 95 %.

21. Matériau selon l'une des revendications 16 à 20 caractérisé en ce que la charge est le kaolin.

22. Matériau selon l'une des revendications 16 à 21 caractérisé en ce qu'il comprend moins de 10 % en poids d'éthylène polymérisé.

23. Matériau selon la revendication 22 caractérisé en ce qu'il comprend moins de 8 % en poids d'éthylène polymérisé.

24. Matériau selon l'une des revendications 16 à 23 caractérisé en ce qu'il présente un module de flexion selon la norme ISO 178 : 93 supérieur à 1800 MPa et une résistance au choc multiaxial mesuré selon la norme ISO 6603-2 : 1989 (F) d'au moins 60 joules.

25. Article obtenu par transformation d'un matériau de l'une des revendications 15 à 24.

26. Article selon la revendication 25 caractérisé en ce qu'il est obtenu par injection dudit matériau.

27. Article selon l'une des revendications 25 ou 26, caractérisé en ce qu'il a un volume supérieur à 1cm³.

28. Article selon l'une des revendications 25 à 27, caractérisé en ce qu'il présente une épaisseur minimale dans toutes les directions d'au moins 1 mm.

29. Article selon la revendication 28 caractérisé en ce qu'il présente une épaisseur minimale dans toutes les directions d'au moins 2 mm.

30. Article selon l'une des revendications 25 à 29 caractérisé en ce qu'il est placé dans l'habitacle intérieur d'un véhicule automobile.

31. Article selon l'une des revendications 25 à 30 caractérisé en ce qu'il est une planche de bord de véhicule automobile.
